# EUROPEAN PATENT APPLICATION

(11) **EP 1 544 721 A2**
(43) Date of publication of application: **22.06.2005**
(21) Application number: 04078461.3
(22) Date of filing: 20.12.2004
(51) Int. Cl.: G06F 3/06, H04L 12/56

(54) **A method of using a storage switch**

(30) Priority: 20.12.2003 GB 0329576
(71) Applicant: Hewlett-Packard Development Company, L.P., Houston, TX 77070 (US)
(72) Inventor: Wakelin, Duncan, Bishopston Bristol BS7 9HR (GB); Evans, Rhys, Parc y Rhath Caerdydd CF23 5QP Wales (GB); Slater, Alastair, Malmesbury Westshire SN16 9LL (GB)
(74) Representative: Marsh, David John

(57) **Abstract**

A method of using a storage switch comprising:
- coupling a data source to a first port of the storage switch,
- coupling a second port of the storage switch to a first port of a first data sink,
- coupling a second port of the first data sink to a first port of a second data sink,
at least the first data sink having a first component for determining whether a data packet received at its first port is addressed to the first data sink and a second component for forwarding the data packet from the second port of the first data sink to the first port of the second data sink in case the data packet is not addressed to the first data sink.

## Description

### Field of the invention

This present invention relates to the field of storage switches, and more particularly without limitation to storage area networks.

### Background and prior art

Switch networks, or fabrics, for transmitting packets between two or more nodes are known. Typically, switch fabrics include a plurality of switches arranged to permit transmission of frames or data packets over different paths or channels. Each node has a port adapted for connection to a respective channel. One illustrative type of switch fabric is Fibre Channel.

Fibre Channel is a serial interface that allows data transfer rates of 100MB/second. Future increase of the Fibre Channel data rate is planned.

The basic connection to a Fibre Channel device is made in accordance with the Fibre Channel physical interface by two serial cables, one carrying in-bound data and the other carrying out-bound data. These cables can be fibre optic or twin-axial copper cables. How the devices are to be connected together is a question of system topology. Several topologies are defined for Fibre Channel including fabric, point-to-point, and arbitrated loop.

In a typical arbitrated loop topology, with a single initiator and several target devices, the out-bound cable from each device becomes the in-bound cable for the next device in the loop. This efficient use of cabling and the associated receivers and transmitters is part of what makes arbitrated loop the lowest cost topology.

Fibre Channel does not rely on a common bus along which all the devices communicate. Instead, Fibre Channel arbitrated loop (FC-AL) communication between two devices relies upon any other devices between the two being able to accurately propagate the information on to the intended destination. Fibre Channel transfers occur in frames of data, with request and acknowledge activity occurring on a frame basis.

Communications between two FC-AL devices occurs as a sequence of primitives and frames sent from one device to another. Payload data representative of user information is transmitted from one device to another in the form of frames. In accordance with the Fibre Channel standard each frame consists of a frame header of 24 bytes followed by a payload of up to 2,048 bytes. The payload contains the data being transmitted, while the frame header contains context information regarding the payload data, such as the addresses of the devices involved.

The Fibre Channel physical interface and protocol can be utilised to couple a data source, such as a host computer, to a storage switch of a storage area network (SAN). In a SAN servers typically require concurrent access to shared storage resources. The storage switch provides this concurrency as well as services such as zoning, i.e. the ability to segment the network and bind each server to specific disc or tape storage resources.

### Summary of the invention

The present invention provides a method of using a storage switch comprising coupling a data source, such as a server or host computer, to a port of the storage switch and coupling another port of the storage switch to a port of a data sink, such as a sequential storage device or a SAN disc. The data sink has at least another port that is used for coupling of the data sink to another data sink.

The data sink that is coupled to the storage switch has a component for determining whether a data packet received from the data source is addressed to it or not. In case the data packet does not address the first data sink, the data sink forwards the data packet. This way data packets can be transmitted from the data source to both data sinks using only two ports of the storage switch such that more efficient usage of the available data rates can be made.

For example, in the case of a fibre channel network interconnecting the data source, the storage switch and the data sinks, the network can provide a data rate of typically 100MB/second. However, a storage device, such as a tape drive, typically supports only a lower data rate of e.g. up to 30MB/second. By interconnecting two or more data sinks and coupling one of the data sinks to the storage switch, the data source can make better usage of the high data rate that is provided by the network as it can access both data sinks through a single pair of ports of the storage switch.

In accordance with a preferred embodiment of the invention, a return path is provided from the data sinks to the data source through the storage switch using the same two ports of the storage switch that are used to transmit data packets from the data source to the data sinks. The return path provides a way to communicate status information back to the data source.

In accordance with a further preferred embodiment of the invention, more than two data sinks are interconnected in a daisy-chained configuration. In other words, data packets can flow from one data sink into the neighbouring data sink. The neighbouring data sink determines whether the data packet is to be processed therein or to be directed to the next neighbouring data sink in the daisy-chain.

If the data packet is to be processed by another data sink, the neighbouring data sink repeats the process and forwards the data packet to its neighbour, until the data packet reaches its intended destination. Hence, data packets pass through intervening data sinks on their way from the first data sink in the daisy-chain to the destination data sink. This is distinguished from a bus configuration in which all nodes exchange information over a bus connecting all devices in a parallel fashion. Preferably dual ported FC-AL devices are used to implement the data sinks.

In accordance with a further preferred embodiment of the invention at least one of the data sinks of the daisy-chained configuration is a tape library. The tape library comprises multiple tape drives and a tape media exchange mechanism for increased storage capacity.

The present invention is particularly advantageous in that it reduces the number of components, in particular the number of storage switches, that are required to build a SAN. In particular fewer expensive switched network ports are required and better usage is made of the data rate provided by the network that typically substantially exceeds the storage media access bandwidth of the data sinks.

### Brief description of the drawings

In the following preferred embodiments of the invention will be described, by way of example only, and with reference to the drawings in which:
- Figure 1: is a schematic block diagram showing a data source coupled to a daisy-chained configuration of data sinks through a storage switch;
- Figure 2: is a flow diagram illustrating steps involved in transmitting a data packet from the data source to a target data sink of the daisy-chained configuration;
- Figure 3: is a schematic block diagram of a data source coupled to a daisy-chained configuration providing a return communication path; and
- Figure 4: is a schematic block diagram of a dual ported tape drive that can be used in a daisy-chained configuration.

### Detailed description

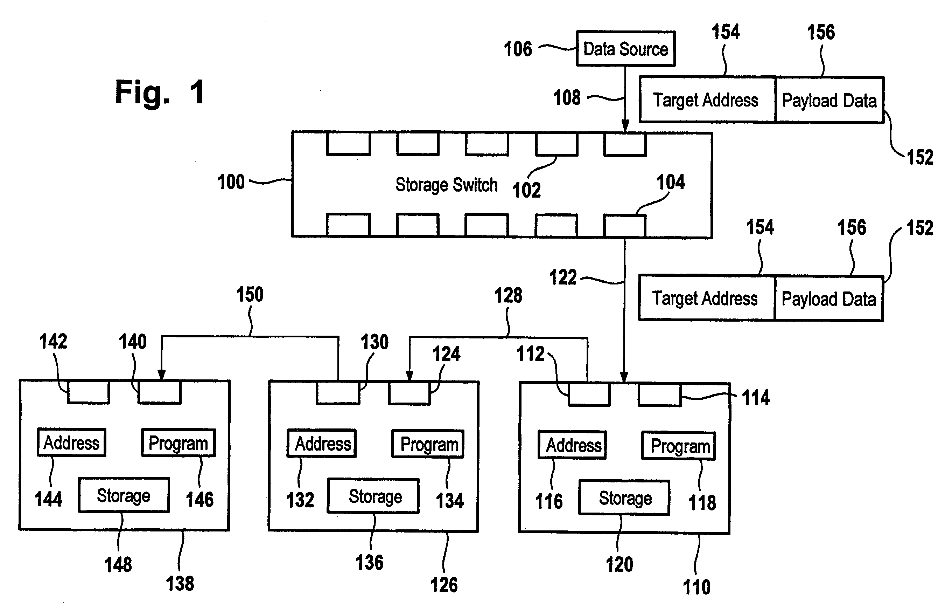

Figure 1 shows storage switch 100 that has a plurality of ports, including ports 102 and 104. Data source 106 is connected to port 102 of storage switch 100 by means of cable 108. For example, data source 106 is a server or host computer.

Dual ported data sink 110 has ports 112 and 114. Further, data sink 110 has a device address that is stored in non-volatile memory 116 as well as program 118 and storage 120. For example data sink 110 is a SAN disc or a tape drive. In the latter case storage 120 is provided by a loaded tape medium.

Port 114 of data sink 110 is connected to port 104 of storage switch 100 by means of cable 122. Port 112 of data sink 110 is connected to port 124 of neighbouring data sink 126 by means of cable 128. Data sink 126 has a design that is similar to data sink 110, i.e. data sink 126 has an additional port 130, non-volatile memory 132 for storage of a device address for data sink 126, program 134 and storage 136.

Data sink 126 has neighbouring data sink 138, that has again a similar design, i.e. ports 140, 142, non-volatile memory 144 for storing the device address of data sink 138, program 146, and storage 148. Data sink 126 is connected to data sink 138 by means of cable 150 that connects ports 130 and 140.

In operation data source 106 sends out data packet 152 via cable 108. Data packet 152 has header 154 that contains a target address and payload data 156. The target address is a device address of one of the data sinks 110, 126, or 138 and thus identifies the target device for data packet 152.

Storage switch 100 receives data packet 152 at its port 102. By means of the target address of data packet 152 port 104 of storage switch 100 is identified as the output port by storage switch 100. From port 104 data packet 152 is transmitted via cable 122 to data sink 110 where it is received at port 114.

This invokes program 118 that reads the target address from header 154 of the data packet 152 and compares the target address with the device address stored in non-volatile memory 116 of data sink 110. In case the target address and the device address stored in non-volatile memory 116 match data sink 110 is identified as the target device of data packet 152 and the payload data 156 is processed by data sink 110, e.g. stored in storage 120.

Alternatively, if the target address does not match the device address program 118 forwards data packet 152 to port 112 from where data packet 152 is transmitted via cable 128 to port 124 of neighbouring data sink 126. This invokes program 134 that examines whether the target address of data packet 152 and the device address stored in non-volatile memory 132 match. If the addresses match data sink 126 is identified as the target device; otherwise data packet 152 is forwarded to the next neighbour, i.e. data sink 138.

For example, cables 108, 122, 128, and 150 as well as storage switch 100 support a data transmission rate of up to X MB/second. Data sinks 110, 126, and 138 support a data rate for storing of data on storage 120, 136, 138, respectively, of Y MB/second. As data rate Y usually is much lower than data rate X more efficient usage of the available data rate X can be made due to the daisy-chained configuration of data sinks 110, 126, and 138. For example if X = 100MB/second and data rate Y=30MB/second up to 90% of data rate X can be utilised as there are three data sinks in the example considered here.

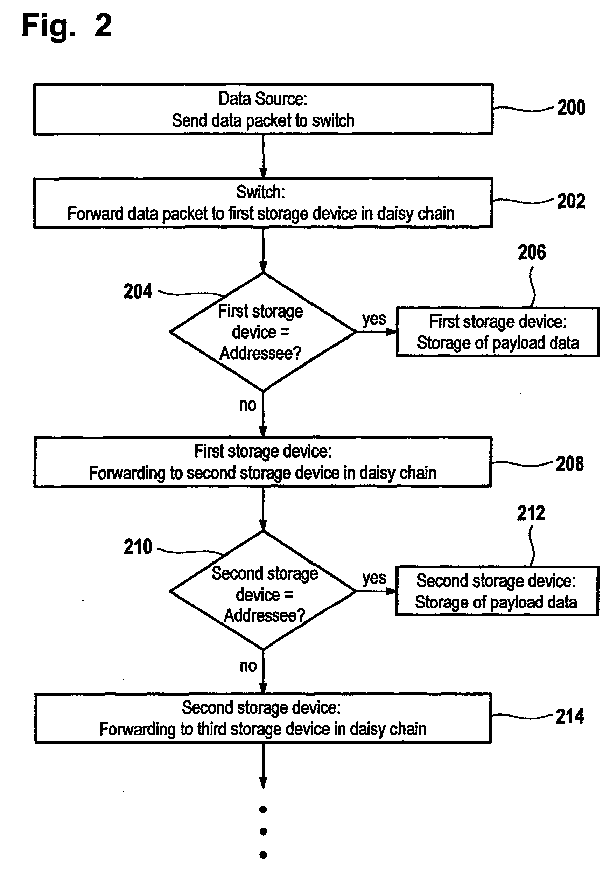

Figure 2 shows a corresponding flow chart. In step 200 a data source, such a server or host computer, sends a data packet or frame to a storage switch through a storage area network (SAN). In step 202 the storage switch forwards the data packet to a first storage device in a daisy-chained configuration. The first storage device compares the target address of the data packet with its device address. If it turns out that the first storage device in the daisy-chained configuration is the addressee of the data packet,m the first storage device stores the payload data on its local storage in step 206. If the contrary is true the first storage device forwards the data packets to a second storage device in the daisy-chained configuration that neighbours the first storage device (step 208).

When the second storage device receives the data packet it determines in step 210 whether it is the addressee or not. If it is the addressee it stores the payload data on its local storage (step 212); otherwise it forwards the data packet to the next neighbouring third storage device in the daisy-chained configuration (step 214).

This procedure goes on until the data packet has reached its target device by meandering through the daisy-chained configuration of storage devices.

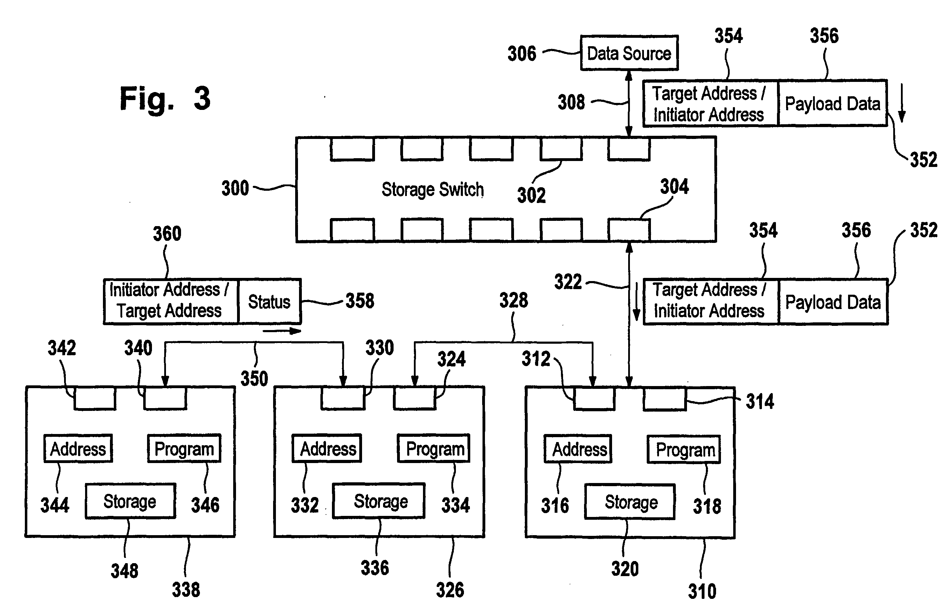

Figure 3 shows an alternative embodiment similar to the embodiment of figure 1. Elements of the embodiment of figure 3 that correspond to elements of the embodiment of figure 1 are designated by like reference numerals having added 200.

In comparison to the embodiment of figure 1 cables 308, 322, 328, 350 provide for duplex connectivity between data sinks 310, 326, 338 and data source 306. This way a return communication path from each one of the data sinks 310, 326, 338 to data source 306 is provided.

Data packet 352 has an additional entry field in header 354 for the initiator address of data source 306. Hence data packet 352 identifies both the target device to which it is addressed as well as the source or initiator address from where it originates. In the following it is assumed without limitation of generality and by way of example only that the target address of data packet 352 is the device address of data sink 338. In other words the target address that is entered in header 354 of data packet 352 matches the device address stored in non-volatile memory 344 of data sink 338.

When data packet 352 is received by data sink 338 at its port 340 program 346 determines that data packet 352 is in fact addressed to data sink 338 as target address and device address match. Next the payload data is stored in local storage 348 and a status information indicative of the successful execution of the storage of the payload data or failure of storage of the payload data is generated and returned to data source 306 by means of data packet 358.

Data packet 358 has header 360 containing the initiator address of data source 306 as target address and the original target address of data sink 338 as initiator address. In other words the address entries in the header 354 of data packet 352 are interchanged in header 360 of return data packet 358.

The payload data of data packet 358 consists of the status information. Data packet 358 propagates via cable 350, data sink 326, cable 328, data sink 310, cable 322, storage switch 300 and cable 308 to data source 306. This way data source 306 is notified of the status of the execution of storage of the payload data it sent out. In the case of a failure data source 306 may resend data packet 352 to the same target address, or in case of consistent failure of the addressed target device, to another target device in the daisy-chained configuration.

Preferably the duplex connectivity between the components in the embodiment of figure 3 is accomplished by means of fibre channel cabling. In the case of a fibre channel network data packets 352 and 358 are transmitted in the form of frames.

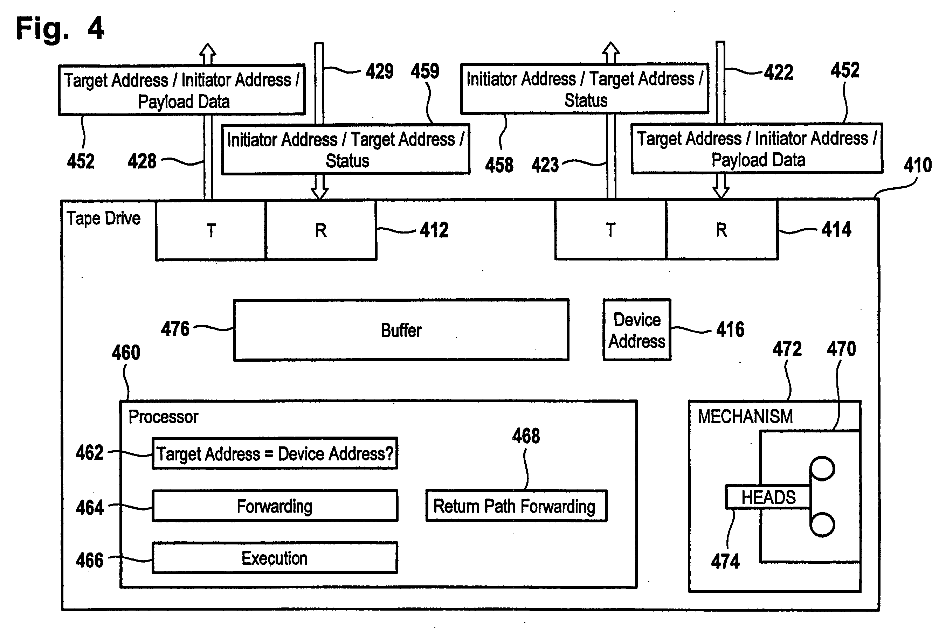

Figure 4 shows a block diagram of an FC-AL compliant dual ported tape drive that can be utilised as a data sink device in the daisy-chained configuration of figure 1 or figure 3.

Tape drive 410 has transmit(T)/receive(R) port 414 and T/R port 416. Port 414 is coupled to cable 422 to receive in-bound data packets and to cable 423 to send out-bound data packets. Likewise port 416 is coupled to cables 428 and 429, for out-bound and in-bound data packets, respectively.

Tape drive 410 has non-volatile memory 416 for storing its device address and buffer 476 that serves as a transmit and receive buffer.

Processor 460 of tape drive 410 executes firmware modules 462, 464, 466, and 468. Firmware module 462 serves to determine whether a data packet received at port 414 is addressed to tape drive 410. Firmware module 464 serves to forward a data packet that is not addressed to tape drive 410 from port 416. Firmware module 466 serves to execute a command that is received at port 414, such as a command for storage of data on tape medium 470 that is loaded in mechanism 472.

Firmware module 468 serves to forward data packets received at port 416 at port 414 in order to establish a return path for returning of status information to the initiator.

In operation tape drive 410 receives data packet 452 via cable 422 at port 414. Data packet 452 is temporarily stored in buffer 476. Firmware module 462 reads the target address from header 454 of data packet 452 and compares it with the device address stored in non-volatile memory 416. If the target and device addresses are not the same firmware module 464 is invoked and data packet 452 is forwarded from port 416 via cable 428 to the next device in the daisy-chained configuration.

If the target address of data packet 452 matches the device address of tape drive 410 firmware module 466 is invoked. Firmware module 466 controls mechanism 472 in order to store the payload data of data packet 452 on tape medium 470 via read/write heads 474. Further firmware module 468 generates status information indicative of successful completion or failure of the storage operation. The corresponding return data packet 458 containing the status information with the initiator address as target address is generated and returned from port 414 via cable 423.

When tape drive 410 receives return path data packet 459 at port 416 via cable 429 from a neighbouring storage device in the daisy-chained configuration this invokes firmware module 468 that forwards data packet 359 along the return path from port 414 via cable 423.

### REFERENCE NUMERALS

- 100: storage switch
- 102: port
- 104: port
- 106: data source
- 108: cable
- 110: data sink
- 112: port
- 114: port
- 116: non-volatile memory
- 118: program
- 120: storage
- 122: able
- 124: port
- 126: data sink
- 128: cable
- 130: port
- 132: non-volatile memory
- 134: program
- 136: storage
- 138: data sink
- 140: port
- 142: port
- 144: non-volatile memory
- 146: program
- 148: storage
- 150: cable
- 152: data product
- 154: header
- 156: payload data
- 300: storage switch
- 302: port
- 304: port
- 306: data source
- 308: cable
- 310: data sink
- 312: port
- 314: port
- 316: non-volatile memory
- 318: program
- 320: storage
- 322: cable
- 324: port
- 326: data sink
- 328: cable
- 330: port
- 332: non-volatile memory
- 334: program
- 336: storage
- 338: data sink
- 340: port
- 342: port
- 344: non-volatile memory
- 346: program
- 348: storage
- 350: cable
- 352: data packet
- 354: header
- 356: payload data
- 358: data packet
- 360: header
- 410: tape drive
- 412: port
- 414: port
- 422: cable
- 423: cable
- 428: cable
- 429: cable
- 452: data packet
- 458: data packet
- 459: data packet
- 460: processor
- 462: firmware module
- 464: firmware module
- 466: firmware module
- 468: firmware module
- 470: tape medium
- 472: mechanism
- 474: heads
- 476: buffer

## Claims

**1.** A method of using a storage switch comprising:
- coupling a data source (106; 306) to a first port (102; 302) of the storage switch (100; 300),
- coupling a second port (104; 304) of the storage switch to a first port (114; 314) of a first data sink (110; 310; 410),
- coupling a second port (112; 312) of the first data sink to a first port (124; 324) of a second data sink (126; 326),
at least the first data sink having a first component (118; 318; 460) for determining whether a data packet (152; 352; 452) received at its first port is addressed to the first data sink and a second component (118; 318; 464) for forwarding the data packet from the second port of the first data sink to the first port of the second data sink in response to a determination that the data packet is not addressed to the first data sink.

**2.** The method of claim 1, further comprising providing a return communication path (428, 423) from the first port of the second data sink to the data source via the first data sink and the switch.

**3.** The method of claim 1 or 2, wherein a duplex communication channel is formed between the data source and the at least first and second data sinks via the switch.

**4.** The method of claim 1, 2 or 3, wherein a fibre channel network is used for coupling the data source to the switch and to the at least first and second data sinks.

**5.** The method of any one of claims 1 to 4, wherein the at least first and second data sinks are coupled in a daisy-chain configuration.

**6.** The method of any of claims 1 to 5, further comprising receiving of the data packet (452) by one of the at least first and second data sinks to which the data packet is addressed, and sending of status information (459) from the one of the at least first and second data sinks along a return path to the data source via the switch in response to the receipt of the data packet.

**7.** The method of any of claims 1 to 6, wherein the first and second components are implemented by firmware.

**8.** The method of any one of claims 1 to 7, wherein the at least first and second data sinks are storage devices.

**9.** The method of any one of claims 1 to 8, wherein at least one of the at least first and second data sinks is a tape drive.

**10.** The method of any one of claims 1 to 9, wherein at least one of the at least first and second data sinks is a tape library.

**11.** The method of any one of claims 1 to 10, wherein the data source has a first data rate and the at least first and second storage devices have second data rates, the second data rates being substantially below the first data rate.

**12.** The method of any one of claims 1 to 11, the data source being coupled to the first port of the storage switch by means of a storage area network.

**13.** A computer program product for controlling a data sink (110; 310; 410) having first (114; 314) and second (112; 312) ports, the computer program product comprising instructions for:
- determining whether a data packet (452) received at the first port from a storage switch (100; 300) is addressed to the data sink,
- forwarding the data packet from the second port in case the data packet is not addressed to the data sink.

**14.** The computer program product of claim 13, the instructions being adapted to
- execute a command received by means of the data packet,
- generate status information (459) indicative of a status resulting from execution of the command,
- output the status information at the first port for transmission to the data source along a return path.

**15.** The computer program product of claim 13 or 14, the instructions being adapted to:
- receive status information at the second port,
- forward the status information at the first port.

**16.** The computer program product of claims 13, 14, or 15, the instructions being adapted to receive and forward the data packets by means of a fibre channel protocol.

**17.** A non-volatile memory comprising firmware (462, 464) for:
- determining whether a data packet (452) received from a storage switch (100; 300) at a first port (114; 314) of a data sink (110; 310; 410) is addressed to the data sink,
- forwarding the data packet from a second port of the data sink in case the data packet is not addressed to the data sink.

**18.** A storage device comprising:
- a first port (114; 314; 414) for receiving data packets (452) from a storage switch (100; 300),
- a second port (112; 312; 412) for forwarding data packets,
- a first component (118; 318; 462) for determining whether a data packet received at the first port is addressed to the storage device,
- a second component (118; 318; 464) for forwarding the data packet from the second port in case the data packet is not addressed to the storage device,
- a third component (120; 320; 472, 474) for storing of payload data of the data packet in case the data packet is addressed to the storage device.

**19.** The storage device of claim 18, the first and second ports being adapted to establish a return communication path for transmitting of status information (459) to a data source (106; 306) of the data packet.

**20.** The storage device of claim 18 or 19, further comprising a data transfer apparatus (472, 474) for storing of the data packet on sequential storage medium (470).

**21.** The storage device of claim 20, wherein the sequential storage medium is a tape medium.

**22.** The storage device of any one of claims 18 to 21 being a tape drive apparatus.

**23.** A tape library comprising a plurality of tape drives (410), at least one of the tape drives comprising:
- a data transfer apparatus (472, 474) for transferring data between a loaded tape medium (470) and the tape drive apparatus,
- a first port (414) for receiving data packets (452) from a storage switch (100; 300),
- a second port (412) for forwarding data packets,
- firmware (464, 466) for forwarding data packets that are not addressed to the tape drive from the second port and for controlling the data transfer apparatus to store payload data of a data packet that is addressed to the tape drive on the tape medium.

**25.** A network comprising a data source (106; 306) coupled to a first port (102; 302) of a storage switch (100; 300), at least first and second data sinks (110, 126, 138; 310, 326, 338; 410), the first data sink having a first port (114; 314; 414) coupled to a second port (104; 304) of the storage switch and a second port (112; 312; 412) coupled to a first port (124; 324) of the second data sink.

**26.** The network of claim 25 comprising a plurality of data sinks being interconnected in a daisy-chained configuration.

**27.** The network of claim 25 or 26, further comprising a return communication path from the at least first and second data sinks to the data source via the storage switch.
